# EUROPÄISCHE PATENTANMELDUNG

(11) **EP 0 670 396 A1**
(43) Veröffentlichungstag der Anmeldung: **06.09.1995**
(21) Anmeldenummer: 95100160.1
(22) Anmeldetag: 07.01.1995
(51) Int. Cl.: E04B 1/76, C04B 30/00, C04B 14/06, F25D 23/06

(54) **Thermische Isolierung, Verfahren zur thermischen Isolierung, thermisch isolierendes Gehäuse und dessen Verwendung**

(30) Priorität: 04.03.1994 DE 4407026
(71) Anmelder: Heraeus Industrietechnik GmbH, D-63450 Hanau (DE)
(72) Erfinder: Lang, Raimund, D-63755 Alzenau (DE); Ruoss, Hermann, D-72336 Balingen (DE); Roggenbuck, Volker, D-35447 Reiskirchen (DE)
(74) Vertreter: Stoffregen, Hans-Herbert, Dr. Dipl.-Phys.

(57) **Zusammenfassung**

Zum Aufbau thermisch isolierender Gehäuse ist eine Wand als sandwichartige Umhüllung von Partikeln geringer Wärmeleitfähigkeit vorgesehen, wobei die Partikel aus einer Mischung von 65 Gewichts-% Partikeln einer mittleren Korngröße von 5 bis 9 nm aus pyrogen hergestellter Kieselsäure, 15 Gewichts-% Partikeln mittlerer Korngröße von 3,1 bis 3,9 µm aus gefällter Kieselsäure und 20 Gewichts-% aus Partikeln einer mittleren Korngröße im Bereich 0,12 bis 0,18 µm aus Microsilica bestehen; die der umgebenden Atmosphäre ausgesetzte Seite der Umhüllung besteht aus Stahl oder Edelstahlblech, während die der Atmosphäre abgewandte Seite aus Stahl, Aluminium oder Edelstahl besteht.

Zur Verbesserung der thermischen Isolierung und Formstabilität des Gehäuses ist eine Luftabführung aus dem von der Umhüllung gebildeten Zwischenraum vorgesehen, wobei ggf. ein Isoliergas mit einem Druck im Bereich von 10 bis 10³ Pascal sich im Zwischenraum befindet.

## Beschreibung

Die Erfindung betrifft eine thermische Isolierung mit fein verteilten, gepreßten Partikeln geringer Wärmeleitfähigkeit, auf der Basis von Kieselsäure, die sandwichartig von einer Umhüllung umgeben sind, sowie ein thermisch isolierendes Gehäuse, Verwendung des Gehäuses sowie ein Verfahren zur Herstellung einer thermischen Isolierung.

Aus der DE-OS 34 18 637 sind Wärmedämmplatten auf der Basis von verpreßtem mikroporösem Wärmedämmstoff mit Umhüllung bekannt, wobei als Wärmedämmaterial 30 bis 100 Gewichts-% feinteiliges Metalloxid, beispielsweise in Form pyrogen erzeugter Kieselsäuren, alkaliarme Fällungskieselsäuren, sowie analog hergestelltes Aluminiumoxid, Titanoxid und Zirkoniumdioxid bekannt sind; weiterhin sind dem Wärmedämmaterial bis zu 30 Gewichts-% Trübungsmittel, beispielsweise in Form von Titanoxidsiliziumcarbid sowie bis zu 20 Gewichts-% Fasermaterial, wie beispielsweise Glaswolle, keramische Fasern und 0 bis 15 Gewichts-% anorganisches Bindematerial, wie beispielsweise Boride des Aluminiums, Titans oder Zirkons vorgesehen. Als Umhüllung dient eine Verbundfolie, die aus zumindest einer metallischen Schicht und einer Schicht aus thermoplastischem Polymermaterial besteht. Der Partialdruck von Luft innerhalb der umhüllten Wärmedammplatte beträgt weniger als 20 mbar.

Ausgehend von einer thermischen Isolation auf der Basis von Wärmedämmplatten nach der oben genannten DE-OS stellt sich die Erfindung die Aufgabe, die thermische lsolierfähigkeit zu verbessern, gesundheitlich verträgliche Werkstoffe einzusetzen und einen Schutz vor Brennbarkeit vorzusehen.

Die Aufgabe wird für eine thermische Isolierung gemäß dem kennzeichnenden Teil des Anspruchs 1 gelöst. Vorteilhafte Ausgestaltungen der thermischen Isolierung sind in den Ansprüchen 2 bis 13 angegeben.

Weiterhin ist nachfolgend ein Ausführungsbeispiel zu einer bevorzugten Ausgestaltung der thermischen Isolierung angegeben.

In einer bevorzugten Ausgestaltung besteht die thermische Isolierung aus folgenden Gewichtsbzw. Volumen-Anteilen von Siliziumdioxid.

| | **Gewichts-%** | **Volumen-%** |
|---|---|---|
| pyrogen hergestellte Kieselsäure | 65 | 81 |
| gefällte Kieselsäure | 15 | 12 |
| Microsilica | 20 | 7 |

Die Aufgabe wird hinsichtlich eines thermischen isolierenden Gehäuses durch die Merkmale des Anspruchs 14 gelöst; vorteilhafte Ausgestaltungen des Gehäuses sind in den Ansprüchen 15 bis 23 angegeben.

Die Verwendung eines thermisch isolierenden Gehäuses wird in Anspruch 24 angegeben.

Im Hinblick auf ein Verfahren zur Herstellung einer thermischen Isolierung wird die Aufgabe durch die Merkmale des Anspruchs 25 gelöst; vorteilhafte Ausgestaltungen des Verfahrens sind in den Ansprüchen 26 bis 33 angegeben.

Ein wesentlicher Vorteil ist darin zu sehen, daß durch die Ausführung und Materialwahl der Innen- und Außenumhüllung die Festkörper-Wärmeleitung nahezu eliminiert wird bzw. durch die Einbringung eines Zwischenmaterials noch zusätzlich reduziert wird.

Ein weiterer Vorteil ist darin zu sehen, daß es sich hierbei um gesundheitlich unbedenkliche Werkstoffe handelt, welche FCKW-frei sind und auch für die Wiederverwendung geeignet sind. Weiterhin erweist sich der hohe Grad der thermischen Isolation im Hinblick auf Energieeinsparung bei Tiefkühlapparaten, Klimaprüfkammern und Wärmeschränken als besonders vorteilhaft.

Im folgenden ist der Gegenstand der Erfindung anhand der Figuren näher erläutert.

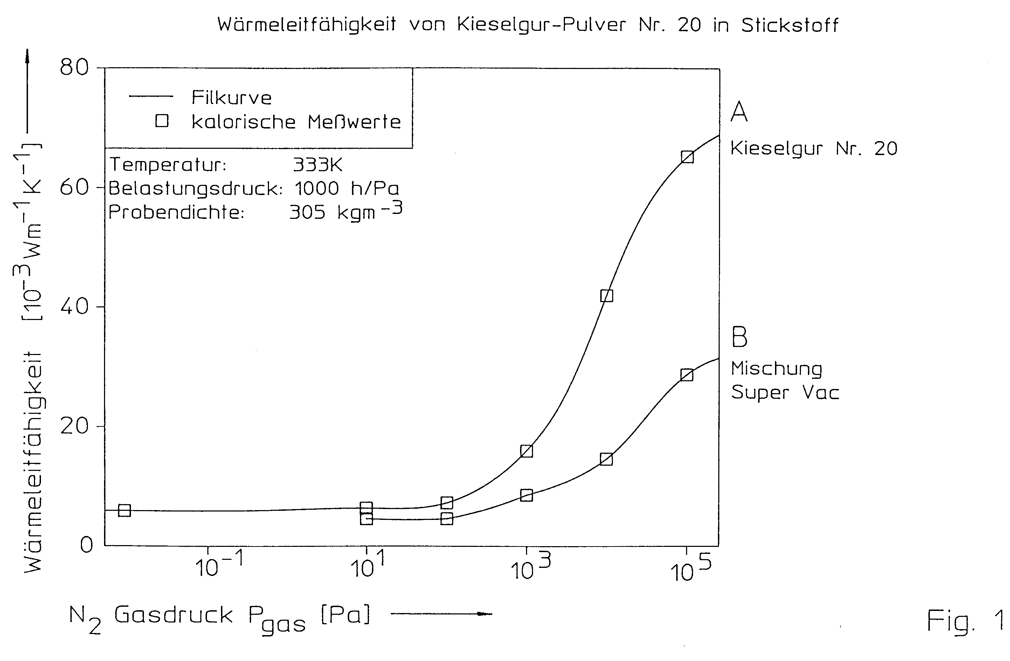

Dabei zeigt Figur 1 die Abhängigkeit der Wärmeleitfähigkeit vom Gasdruck innerhalb der Umhüllung im Vergleich mit einer bekannten, mit Kieselgurpulver gefüllten Vakuumisolierung.

Die Figuren 2a, 2b, 2c und 2d zeigen den allgemeinen Aufbau einer thermischen Isolierung, wobei schematisch die Partikel geringer Wärmeleitfähigkeit in ihrer Umhüllung dargestellt sind;
Figur 3 zeigt ein thermisch isolierendes Gehäuse in Trogform.

Figur 1 bezieht sich gemäß Kurve A auf die Wärmeleitfähigkeit von Kieselgurpulver in Stickstoffatmosphäre in Abhängigkeit vom Gasdruck, Kurve B auf eine thermische Isolierung gemäß der vorliegenden Erfindung, wobei eine Temperatur von 333 K, ein Belastungsdruck von 1000 hPa, sowie eine Probendichte von 305 kg/m³ angenommen werden.

Wie aus Figur 1 ersichtlich ist, liegt bei einem Gasdruck von 10 Pa (10¹ Pa) der Wert der Wärmeleitfähigkeit λ im Bereich von 7x(10⁻³Wm⁻¹K⁻¹) für Kurve A und für Kurve B ein Wert von 5 (10⁻³Wm⁻¹K⁻¹); bei einem weiteren Ansteigen des Stickstoff-Gasdrucks auf einen Wert von 10³ Pa kann nur eine geringe Steigerung der Wärmeleitfähigkeit gemäß Kurve B festgestellt werden, während gemäß Kurve A eine nahezu doppelt so hohe Wärmeleitfähigkeit λ mit einem Wert von ca. 17x(10⁻³Wm⁻¹K⁻¹) ermittelt wird. Eine weitere starke Erhöhung der Wärmeleitfähigkeit nach Kurve A gegenüber Kurve B ist im Bereich von 10⁴Pa erkennbar, in dem die Wärmeleitfähigkeit gemäß Kurve A einen knapp über 40 (10⁻³Wm⁻¹K⁻¹) liegenden Wert erreicht, während gemäß Kurve B der Wärmeleitfähigkeitswert bei ca. 15 (10⁻³Wm⁻¹K⁻¹) liegt; bei einem Stickstoff-Gasdruck von 10⁵ Pa ergibt sich für Kurve A ein Wärmeleitfähigkeitswert λ von ca. 65 (10⁻³Wm⁻¹K⁻¹), während er für Kurve B bei ca. 27 (10⁻³Wm⁻¹K⁻¹) liegt. Es zeigt sich somit gemäß Figur 1, daß die Wärmeleitfähigkeit auch bei starker Erhöhung des Gasdruckes nach der für die thermische Isolierung gemäß dem Gegenstand der Erfindung vorliegenden Kurve B erheblich geringer ansteigt, als für die Kurve A, welche für Kieselgurpulver gilt.

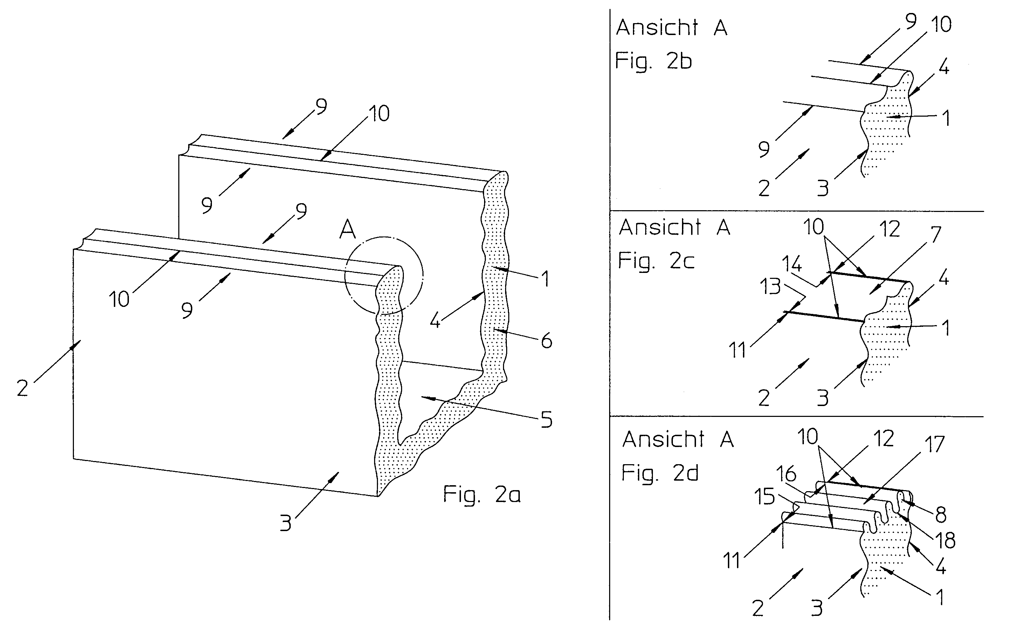

In Figur 2a ist die thermische Isolierung mittels feinverteilter gepreßter Partikel 1 erkennbar, welche sandwichartig von einer Umhüllung 2 umgeben sind, wobei die Partikel gemäß Ausführungsbeispiel 1 zu 65 Gewichts-% bzw. 81 Volumen-% aus einer mittleren Korngröße pyrogen hergestellter Kieselsäure im Bereich von 5 bis 9 nm bestehen; weiterhin enthält die Mischung zu 15 Gewichts-% bzw. 12 Volumen-% Partikel einer mittleren Korngröße im Bereich von 3,1 bis 3,9 µm ausgefällter Kieselsäure; der Rest der Mischung besteht zu wenigstens 20 Gewichts-% aus Mikrosilica-Partikeln einer mittleren Korngröße im Bereich von 0,12 bis 0,18 µm; Microsilica-Partikel sind unter anderem als Zusatzmittel zur Herstellung von Beton bekannt, um dessen Festigkeitseigenschaften zu verbessern. Die Partikel sind von einer Stickstoffatmosphäre in einem Druck-Bereich von 10 bis 10³ Pascal umgeben; es ist jedoch auch möglich eine soliergas enthaltende Atmosphäre im gleichen Druckbereich einzusetzen, beispielsweise eine Schwefelhexafluorid, Kohlendioxid, Argon, Krypton oder Radon enthaltende Atmosphäre. Die der umgebenen Atmosphäre ausgesetzte Seite 3 der Umhüllung 2 besteht aus Stahl oder Edelstahl, während die der umgebenen Atmosphäre abgewandte Seite 4 der Umhüllung 2 aus Aluminium, Stahl oder aus Edelstahl besteht; Seite 4 begrenzt den gegenüber der Außenatmosphäre thermisch isolierten Innenraum 5. Die Umhüllung besteht beidseitig jeweils aus einem Metall der Dicke im Bereich von 0,1 bis 3 mm, wobei ggf. auch ein Metallverbund bzw. Verbundfolie einsetzbar ist; der zur Aufnahme der Partikel 1 vorgesehene Zwischenraum ist mit Ziffer 6 bezeichnet.

Zur hermetischen Abdichtung der Partikel 1 der thermischen Isolierung gegenüber der äußeren Atmosphäre sind die beiden Seiten der Umhüllung 2 in ihrem Randbereich direkt oder über nachfolgend erläuterte Distanzelemente miteinander verschweißt, verlötet oder verklebt, wobei die jeweilige Verbindungsnaht zwischen den Rändern der Umhüllung, bzw. der Umhüllung und des Distanzelements mit Bezugsziffer 10 bezeichnet ist. Die Dicke des von der Umhüllung 2 umfaßten Zwischenraumes zur Aufnahme der Partikel liegt im Bereich von 10 bis 200 mm. Als besonders vorteilhaft erweist es sich daß durch die Ausführung und Materialwahl von Außenund Innenseite der Umhüllung 2 die Festkörperwärmeleitung nahezu eliminiert wird, bzw. durch die Einbringung von Distanzelementen noch zusätzlich reduziert wird.

Zur Herstellung der thermischen Isolierung werden die Partikel mit ihren verschiedenen Korngrößen miteinander gemischt und als Mischung in die Umhüllung 2 eingebracht und unter Luftabführung zusammengepreßt, wobei nach dem Preßvorgang die Partikel 1 durch Verschweißen, Verlöten oder Verkleben der Umhüllung 2 gegenüber der Außenatmosphäre mittels Verbindungsnaht 10 hermetisch abgedichtet werden. Die Verbindungsnaht 10 besteht dann aus einer Schweißnaht, Lötnaht oder Klebefläche.

Figur 2b zeigt eine Ausschnittsvergrößerung des mit A bezeichneten Kreisausschnitts in Figur 2a, wobei die mit Bezugsziffer 10 bezeichnete Verbindungsnaht erkennbar ist; die Verbindungsnaht 10 ist durch Verschweißen der Ränder 11, 12 der Seiten 3 und 4 der Umhüllung als Schweißnaht ausgebildet; die durch Umfalzen gebildeten Seitenkanten 9 bilden eine wandartige Geometrie der Umhüllung 2 aus.

Anhand der in Figur 2c dargestellten Ausschnittsvergrößerung gemäß Kreisausschnitt A ist der Einsatz eines Distanzelementes 7 zur Abdichtung der Umhüllung 2 gezeigt, wobei das Distanzelement 7 vorzugsweise aus Edelstahl in einer Dicke zwischen 0,1 und 0,5 mm besteht und an seinen sich gegenüberliegenden Rändern 13,14 mit der Umhüllung 2 entlang der Ränder 11, 12 der Seiten 3, 4 jeweils durch Verschweißen in Form einer Verbindungsnaht 10 mit den Rändern 11, 12 verbunden ist.

Figur 2d zeigt eine Ausschnittsvergrößerung des Kreisausschnitts A der Figur 2a, in der ein mäanderförmig ausgebildetes Distanzelement 8, vorzugsweise aus Edelstahl mit dem Randbereich der Umhüllung 2 durch Verschweißen entlang einer Verbindungsnaht 10 verbunden ist, wobei sich das mäanderförmige Profil senkrecht zu den zur Verbindung mit Umhüllung 2 vorgesehenen Rändern 15, 16 des Distanzelements erstreckt, so daß Kämme 17 und Talsohlen 18 des wellenförmig ausgebildeten Mäanders parallel zu den Rändern 15, 16 verlaufen; als besonders vorteilhaft hat sich der Einsatz eines solchen mäanderförmigen Distanzelements 8 aufgrund des großen Wärmeleitwiderstandes zwischen den mittels Distanzelement 8 verbundenen Seiten 3, 4 der Umhüllung 2 herausgestellt.

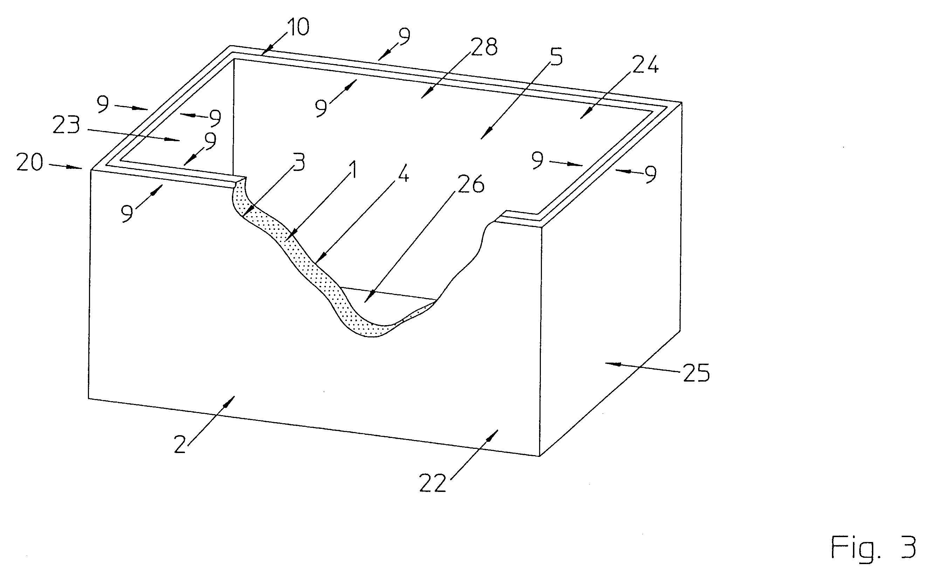

Gemäß Figur 3 ist es möglich, ein thermisch isolierendes Gehäuse mit einer wandartigen Umhüllung 2 aufzubauen, wobei die Umhüllung 2, ähnlich wie bereits anhand Figur 2a erläutert mit Partikeln 1 verschiedener Größen gefüllt ist. Gemäß Figur 3 besteht die Umhüllung 2 aus fünf annähernd rechteckigen Wandelementen, welche jedoch wie bereits anhand Figur 2a erläutert einen gemeinsamen Zwischenraum 6 zur Aufnahme der Par- tikel 1 bilden. Die einzelnen Gehäuse-Wandelemente sind mit 22, 23, 24, 25 und 26 bezeichnet. An der Oberkante des Troges, bzw. truhenförmigen Gehäuses 20 verläuft die entlang der Kanten 9 der Außen- und Innenseiten 3, 4 der Umhüllung 2 bzw. der Wandelemente 22, 23, 24 und 25 gebildeten Verbindungsnaht 10 entlang. Zur besseren Übersicht ist Wandelement 22 teilweise aufgebrochen dargestellt, wobei zwischen den beiden Seiten 3, 4 der Umhüllung 2 die Anordnung der Partikel 1 im Zwischenraum 6 erkennbar ist. Die dem als Bodenplatte dienenden Wandelement 26 gegenüberliegende Öffnung des Gehäuses ist mit Ziffer 28 bezeichnet; sie kann durch eine thermisch isolierende Abdeckung verschlossen werden.

Die Herstellung eines Gehäuses gemäß Figur 3 erfolgt beispielsweise dadurch, daß durch abnehmbare, hier nicht sichtbare äußere Distanzelemente ein gleichmäßiger Abstand der einen gemeinsamen Hohlraum bildenden Umhüllung aus allen Wandelementen 22, 23, 24, 25 und 26 geformt wird, wobei dann anschließend die gemischten Partikel 1 eingebracht und unter Luftentzug miteinander verpreßt werden; dabei wird ggf. Isoliergas- oder Stickstoffatmosphäre zugegeben; als besonders vorteilhaft hat sich neben der Anwendung eines Grob- bzw. Feinvakuums die Zugabe von Edelgas erwiesen, wobei sich der Einsatz von Radon als besonders günstig für die thermische Isolierung erwiesen hat. Der Preßvorgang kann in einer üblichen Stempelpresse erfolgen, wobei sich an den Preßvorgang direkt der Schweißvorgang, Lötvorgang oder Klebevorgang zum hermetischen Abdichten der Partikel gegenüber der Außenatmosphäre anschließt.

Es ist jedoch auch möglich, ein Gehäuse aus jeweils für sich thermisch isolierten Wandelementen aufzubauen.

Als besonders vorteilhaft erweist sich beim Gegenstand der Anmeldung, daß aufgrund der rechteckigen ebenen Öffnung eine verschließbare Tür, bzw. ein verschließbarer Trog-Deckel aufzubringen ist, der seinerseits wiederum aus einer thermischen Isolierung beispielsweise nach Figur 2 bestehen kann. Es ist jedoch auch möglich, die Öffnung 28 des truhenförmigen Gehäuses 20 durch eine Tür, bzw. einen Deckel aus einer ebenen Umhüllung gegenüber der Außenatmosphäre abzuschließen. Dabei müssen jedoch entlang der Verbindungsnaht besondere Dichtungsmaßnahmen getroffen werden, die auch die notwendige Temperaturstabilität aufweisen.

Ein weiterer wesentlicher Vorteil ist darin zu sehen, daß bei einem Vakuum im Zwischenraum der Umhüllung der äußere Atmosphärendruck die Partikel zu einer stabilen Form zusammenpreßt, so daß das truhenförmige Gehäuse 20 auch zumindest im eingeschränkten Maße als formbeständiges, tragendes Element eingesetzt werden kann.

## Patentansprüche

1. Thermische Isolierung mit fein verteilten, gepreßten Partikeln geringer Wärmeleitfähigkeit, auf der Basis von Kieselsäure, die sandwichartig von einer Umhüllung umgeben sind, dadurch gekennzeichnet, daß die Partikel aus wenigstens zwei Schüttungen verschiedener mittlerer Korngröße bestehen, von denen eine Korngröße kleiner als 0,12 µm und die andere Korngröße größer oder gleich 0,12 µm, wobei wenigstens 60 Gewichts-% der Partikel eine mittlere Korngröße kleiner als 0,12 µm aufweisen.

2. Thermische Isolierung nach Anspruch 1, dadurch gekennzeichnet, daß wenigstens 60 Gewichts-% der Partikel eine mittlere Korngröße im Bereich von 5 bis 9 nm aufweist, daß wenigstens 13 Gewichts-% der Partikel eine mittlere Korngröße im Bereich von 3,1 bis 3,9 µm aufweist und wenigstens 18 Gewichts-% eine mittlere Korngröße im Bereich von 0,12 bis 0,18 µm aufweist.

3. Thermische Isolierung nach einem der Ansprüche 1 oder 2, dadurch gekennzeichnet, daß die Partikel der mittleren Korngröße kleiner als 0,12 µm aus pyrogenem Siliziumdioxid bestehen.

4. Thermische Isolierung nach Anspruch 2, dadurch gekennzeichnet, daß Partikel der mittleren Korngröße größer 0,12 µm und kleiner 0,18 µm aus Microsilica bestehen.

5. Thermische Isolierung nach Anspruch 2, dadurch gekennzeichnet, daß die Partikel mittlerer Korngröße größer 3,1 µm aus gefällter Kieselsäure bestehen.

6. Thermische Isolierung nach einem der Ansprüche 1 bis 5, dadurch gekennzeichnet, daß die sandwichartige Umhüllung beidseitig jeweils aus einem Metall der Dicke im Bereich von 0,1 bis 3 mm besteht.

7. Thermische Isolierung nach einem der Ansprüche 1 bis 6, dadurch gekennzeichnet, daß die der umgebenden Atmosphäre ausgesetzte Seite der Umhüllung aus Stahl oder Edelstahlblech besteht.

8. Thermische Isolierung nach Anspruch 7, dadurch gekennzeichnet, daß die der umgebenden Atmosphäre abgewandte Seite der Umhüllung aus Stahl, Aluminium oder Edelstahl besteht.

9. Thermische Isolierung nach einem der Ansprüche 6 bis 8, dadurch gekennzeichnet, daß beide Seiten der Umhüllung an ihren Rändern miteinander verschweißt, verlötet oder verklebt sind.

10. Thermische Isolierung nach einem der Ansprüche 6 bis 8, dadurch gekennzeichnet, daß zwischen beiden Seiten im Randbereich der Umhüllung ein Distanzelement (7, 8) aus einem Werkstoff geringer Wärmeleitfähigkeit angeordnet ist.

11. Thermische Isolierung nach Anspruch 10, dadurch gekennzeichnet, daß das Distanzelement (7, 8) aus Metall, Kunststoff oder Glas besteht.

12. Thermische Isolierung nach Anspruch 10 oder 11, dadurch gekennzeichnet, daß das Distanzelement (8) in Form eines Mäanders ausgebildet ist.

13. Thermische Isolierung nach einem der Ansprüche 10 bis 12, dadurch gekennzeichnet, daß das Distanzelement (7, 8) mit beiden sich gegenüberliegenden Rändern (11, 12) der Seiten (3, 4) der Umhüllung (2) verschweißt, verlötet und verklebt ist.

14. Thermisch isolierendes Gehäuse mit wenigstens einer Wand aus Partikeln geringer Wärmeleitfähigkeit, die sandwichartig von zwei im Abstand zueinander angeordneten Außenwänden als Umhüllung in Form von Wandelementen umgeben sind, dadurch gekennzeichnet, daß die Partikel (1) aus wenigstens zwei Schüttungen verschiedener mittlerer Korngröße bestehen, von denen eine Korngröße kleiner als 0,12 µm und die andere Korngröße größer oder gleich 0,12 µm ist, wobei wenigstens 60 Gewichts-% der Partikel eine mittlere Korngröße kleiner als 0,12 µm aufweisen und daß die beiden Seiten (3, 4) der die Umhüllung (2) bildenden Wandelemente (22, 23, 24, 25, 26) an ihren Rändern miteinander gasdicht abgeschlossen sind.

15. Gehäuse nach Anspruch 14, dadurch gekennzeichnet, daß wenigstens 60 Gewichts-% der Partikel eine mittlere Korngröße im Bereich von 5 bis 9 nm aufweisen, daß wenigstens 13 Gewichts-% der Partikel eine mittlere Korngröße im Bereich von 3,1 bis 3,9 µm aufweisen und wenigstens 18 Gewichts-% eine mittlere Korngröße im Bereich von 0,12 bis 0,18 µm aufweisen.

16. Gehäuse nach Anspruch 15, dadurch gekennzeichnet, daß die Partikel der mittleren Korngröße kleiner als 0,12 µm aus einem pyrogenem Siliziumdioxid bestehen, daß Partikel der mittleren Korngröße größer 0,12 µm und kleiner 0,18 µm aus Microsilica bestehen und daß Partikel mittlerer Korngröße größer 3,1 µm aus gefällter Kieselsäure bestehen.

17. Gehäuse nach einem der Ansprüche 14 bis 16, dadurch gekennzeichnet, daß die beiden Außenwände der Umhüllung (2) jeweils aus einem Metall der Dicke im Bereich von 0,1 bis 3 mm bestehen.

18. Gehäuse nach einem der Ansprüche 14 bis 17, dadurch gekennzeichnet, daß die der umgebenden Atmosphäre ausgesetzte Seite (3) der Umhüllung (2) aus Stahl oder Edelstahlblech besteht.

19. Gehäuse nach Anspruch 18, dadurch gekennzeichnet, daß die der umgebenden Atmosphäre abgewandte Seite (4) der Umhüllung (2) aus Stahl, Aluminium oder Edelstahl besteht.

20. Gehäuse nach einem der Ansprüche 18 oder 19, dadurch gekennzeichnet, daß beide Seiten (3, 4) der Umhüllung (2) an ihren Rändern gasdicht miteinander verschweißt, verlötet oder verklebt sind.

21. Gehäuse nach einem der Ansprüche 18 oder 19, dadurch gekennzeichnet, daß beide Seiten (3, 4) der Umhüllung (2) an ihrem jeweiligen Randbereich über ein Distanzelement (7, 8) gasdicht miteinander verbunden sind.

22. Gehäuse nach einem der Ansprüche 14 bis 21, dadurch gekennzeichnet, daß der Abstand der Außenwände der Umhüllung (2) im Bereich von 10 bis 200 mm liegt.

23. Gehäuse nach einem der Ansprüche 14 bis 22, dadurch gekennzeichnet, daß alle Wandelemente (22, 23, 24, 25, 26) einen gemeinsamen Hohlraum zur Aufnahme der Partikel (1) bilden.

24. Verwendung des Gehäuses nach einem der Ansprüche 14 bis 23, in einem Klimatisierungsrät, dessen Probenraum auf eine Temperatur im Bereich von -200° bis +400°C einstellbar ist.

25. Verfahren zur Herstellung. einer thermischen Isolierung, wobei Partikel geringer Wärmeleitfähigkeit in eine Umhüllung eingebracht und dort verpreßt werden, dadurch gekennzeichnet, daß Partikel verschiedener Korngröße, von denen wenigstens eine Schüttung mit einer mittleren Korngröße kleiner als 0,12 µm und wenigstens eine andere Schüttung einer mittleren Korngröße größer oder gleich 0,12 µm aufweist, miteinander gemischt und als Mischung in die Umhüllung eingebracht und wenigstens einmal gepreßt werden und daß nach dem Preßvorgang die Partikel durch Verschließen der Umhüllung gegenüber der Außenatmosphäre abgedichtet werden.

26. Verfahren nach Anspruch 25, dadurch gekennzeichnet, daß die Mischung mit wenigstens 60 Gewichts-% aus Partikeln einer mittleren Korngröße im Bereich von 5 bis 9 nm, mit wenigstens 13 Gewichts-% aus Partikeln einer mittleren Korngröße im Bereich von 3,1 bis 3,9 µm und mit wenigstens 18 Gewichts-% aus Partikeln einer mittleren Korngröße im Bereich von 0,12 bis 0,18 µm hergestellt wird.

27. Verfahren nach Anspruch 26, dadurch gekennzeichnet, daß der Mischung zu wenigstens 60 Gewichts-% Partikel aus einer mittleren Korngröße pyrogen hergestellter Kieselsäure im Bereich von 5 bis 9 nm zugeführt werden.

28. Verfahren nach Anspruch 26 oder 27, dadurch gekennzeichnet, daß der Mischung zu wenigstens 13 Gewichts-% Partikel einer mittleren Korngröße im Bereich von 3,1 bis 3,9 µm aus gefällter Kieselsäure zugeführt werden.

29. Verfahren nach einem der Ansprüche 26 bis 28, dadurch gekennzeichnet, daß der Mischung zu wenigstens 18 Gewichts-% Partikel einer mittleren Korngröße im Bereich von 0,12 bis 0,18 µm aus Microsilica zugeführt werden.

30. Verfahren nach einem der Ansprüche 25 bis 29, dadurch gekennzeichnet, daß während des Preßvorganges Luft aus der Umhüllung abgesaugt wird.

31. Verfahren nach einem der Ansprüche 25 bis 30, dadurch gekennzeichnet, daß nach dem Preßvorgang Edelgas in die Umhüllung eingebracht wird.

32. Verfahren nach einem der Ansprüche 30 oder 31, dadurch gekennzeichnet, daß sich gegenüberliegende Ränder der Umhüllung (2) miteinander so verschweißt, verlötet oder verklebt werden, daß die Partikel gegenüber der Außenatmosphäre hermetisch dicht abgeschlossen sind.

33. Verfahren nach einem der Ansprüche 30 oder 31, dadurch gekennzeichnet, daß zwischen sich gegenüberliegenden Rändern (11, 12) der Umhüllung (2) ein Distanzelement (7, 8) eingesetzt und mit den Rändern (11, 12) der Umhüllung (2) gasdicht so verbunden wird, daß die Partikel (1) gegenüber der Außenatmosphäre hermetisch dicht abgeschlossen sind.
